# EUROPEAN PATENT APPLICATION

(11) **EP 3 421 829 A1**
(43) Date of publication of application: **02.01.2019**
(21) Application number: 18172021.0
(22) Date of filing: 14.05.2018
(51) Int. Cl.: F16C 39/02, F16C 19/18, F16C 19/52, F16C 33/58, F03D 80/70

(54) **BEARING HAVING A STIFFENER OF OVERSTRESS COMPENSATION**

(30) Priority: 30.06.2017 ES 201730868
(71) Applicant: Laulagun Bearings, S.A., 20212 Olaberria (ES)
(72) Inventor: Zurutuza Santa Cruz, Aitor, Olaberria (Gipuzkoa) 20212 (ES); Lekuona Agirrebengoa, Ioseba, Olaberria (Gipuzkoa) 20212 (ES); Asensio Iriarte, Mikel, Olaberria (Gipuzkoa) 20212 (ES); Olave Irizar, Mireia, Olaberria (Gipuzkoa) 20212 (ES)
(74) Representative: Izquierdo Faces, José

(57) **Abstract**

Bearing having a stiffener of overstress compensation using such stiffener to compensate overstresses produced in specific arc circumferential areas having critical stress in a rolling ring and being used in eolian facilities or like where the bearing (3) in the arc circumferential area with critical stress (6) has a multiple structure non-metallic stiffener attached thereto (10) comprising a synthetic base frame (11) and inclusions being resistant to traction (12) facing towards, at least, the direction of the main overstress to be compensated.

## Description

### Field of the invention

This invention relates to a bearing having a stiffener of overstress compensation being used in wind farms or like.

### State of the prior art

Big size bearings to be used in different fields are commercially available nowadays, and the common use of big bearings is in the eolian field.

One of the sites of the wind turbine where such bearings are used is in the blades of the wind turbine. During the operation of the wind turbine very complex stresses arise on the bearings of the blades in the wind turbine, and such stresses are due to the force of the wind, the force caused by the weight of the blade and the centrifugal force caused by the turn of the blade in the wind turbine. Such overstresses are increased in the edge of the housings in the rolling rings. The most detrimental stresses in the bearing are caused in the circumferential direction to the turn shaft of the bearing (called "hoop" direction") and an especially critical arc circumferential area exists within such circumferential direction (called "hoop" area") wherein the strongest stresses occur and they need to be reduced or compensated by stiffeners attached to outer (and/or inner) rolling rings of the bearing because oversizing the whole bearing may be undesirable due to the weight, cost and complexity.

The use of arc circular metallic stiffeners, their screwed joint and the use of different cross sections intended to improve the overstress compensations is known in the art.

Therefore, Spanish Patent ES 200602873 by Gamesa Innovation & Technology, S. L. is known and it shows the reinforcement by a bearing of a blade in a wind turbine having an arc circumferential stiffener attached thereto on a portion of the outer rolling ring where the joint is done through screwed joints.

Also known is European Patent EP 08104136 by Siememens Aktiengesellschaft, which shows advantageous geometrical shapes of the outer and/or inner rolling ring portion of an arc circumferential stiffener.

In the metallic stiffeners being joined by screws and so far known, a substantial increase of the overall structural weight of the wind turbine takes place, and such feature is undesirable.

Furthermore, the screwed joints need more space in the rolling ring section for the screwing holes and need section recalculations by increasing their surfaces, so bigger and heavier stiffeners are required, emphasizing the drawbacks of their use.

For example, for a bearing supporting extreme loads of fifteen thousand kilo newton per meter (15,000 kNm) a bearing having a diameter of two thousand and seven hundred millimeters (2,700 mm) and a weight of about two thousand and five hundred kilograms (2,500 kg) is required. The necessary steel stiffener weights approximately 10% of the weight of the bearing, that is, two hundred and fifty kilograms (250 kg) and spans between one hundred and forty and one hundred and eighty degrees (140°-180°) of the bearing portion.

Such solutions are complicate to repair and replace on site because they need unscrew process in very difficult positions and even the unscrew process of the bearing itself.

### Disclosure and advantages of the invention

In the state of the art, the essential object of this invention is a bearing having a stiffener of overstress compensation having a multiple structure non-metallic stiffener attached in the arc circumferential area with critical stress, such stiffener comprising a synthetic base and inclusions being resistant to traction facing towards at least the direction of the main overstress to be compensated.

Thanks to such arrangement, since it is a multiple structure non-metallic stiffener, a bearing having stiffener with a bigger resistance than the metallic stiffener but considerably lighter is achieved. Therefore, the overall weight of the wind turbine structure is reduced. Their placement in the bearing is also easier.

Another feature of this invention is that the inclusions being resistant to traction are made up of resistant structural elements facing the direction of the main overstress to be compensated.

The advantage of such arrangement is that a higher resistance to traction is achieved just in the precise site of the cross section and this allows the easy production of an specific stiffener having an specific resistance according to the number, material and section of the included structural elements; as such, the manufacturing is easier and it allows that a replacement of bearing is no longer necessary, since the implementation and reparations are easily achieved on site.

Yet another feature of this invention is that the attachment of the multiple structure non-metallic stiffener to the arc circumferential area with critical stress may be done through an adhesive joint, being reinforced with screwed metallic joints or not.

Thanks to such arrangement, a type of joint or another, or a combination of both may be done according to the characteristics of the type of facilities and the place thereof (dry, humid, saline environment, ...).

Yet another feature of this invention is that the multiple structure non-metallic stiffener has an arc amplitude, section, material and nature being resistant to traction according to the specific overstress of each bearing.

The advantage of such arrangement is that a wider versatility is obtained, since the multiple structure non-metallic stiffener may adapt to different situations based on the facilities features. It may be also possible to carry on the stiffness process and/or the reparations of the bearing on site, this is, when any fault or crack in the bearing is identified it is possible to decelerate or even stop the progress of the crack by using the multiple structure non-metallic stiffener. In addition, the multiple structure non-metallic stiffener may be applied during the manufacturing of the bearing in situ, that is, when the bearing is in the assembly facilities, before or after the assembly in the hub of the blades joint of the wind turbine, and it may be easily replaced in case a fault is found.

Another feature of this invention is that it is foreseen that the inclusions being resistant to traction may adopt single-line and/or braided cord shape, mesh shape or fabric having complementary resistance in cross direction.

Thanks to such arrangement, a higher bearing resistance is obtained, and the bearing having the multiple structure non-metallic stiffener is able to support heavier stresses.

Another feature of this invention is that the adoption of suitable cross sections for possible stresses is foreseen.

The advantage of such arrangement is that a bearing having a particular section or another may be used according to the type of eolian facilities and to the type of stress the bearing is undergoing.

Another feature of the invention is that the variable distribution of the inclusions being resistant to traction within the same cross section is foreseen.

Thanks to such arrangement, a higher resistance and stiffness of the bearing, and therefore a longer durability are obtained, taking advantage of the available space.

Another feature of the invention is that it is foreseen that the multiple structure non-metallic stiffener is included around the outer rolling ring and/or the inner rolling ring of the bearing.

The advantage of such arrangement is that, depending on the stresses generated in the facilities, the placement of the multiple structure non-metallic stiffener is possible in one area or another.

According to this invention, it is foreseen that the angular amplitude of the multiple structure non-metallic stiffener may reach the complete crown (360°), if desired.

Thanks to the arrangements of this invention, it may be possible to reinforce the bearing based on the specific stress of each type of facilities.

Another feature of this invention is that it is foreseen that the inclusions being resistant to traction are totally or partially metallic, maintaining the non-metallic feature of the multiple structure non-metallic stiffener.

The advantages of such arrangement make the multiple structure non-metallic stiffener be more versatile, and it may be adapted to any type of facilities based on the required needs.

### Drawings and references

For a better understanding of the invention, the appended drawings depict a merely illustrative and non-limiting embodiment.

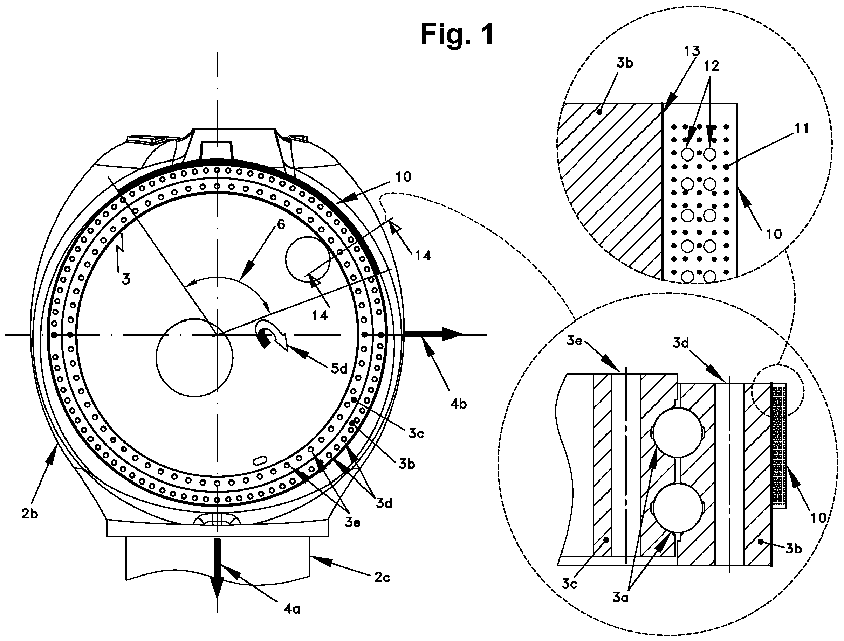

Figure 1 depicts, on the right side, a view of the bearing (3) in the joint hub of the blades of the wind turbine (2b) having the multiple structure non-metallic stiffener (10) in black colour, attached to the outer rolling ring (3b) and wherein the stresses it undergoes are seen due to the operation of the wind turbine (2).

For a better understanding, an enlarged detail of the cross section (14) of the bearing (3) is depicted in the right bottom side, where the multiple structure non-metallic stiffener (10) attached to the outer rolling ring (3b) is seen.

For a better display of the multiple structure non-metallic stiffener (10), the detail is widely enlarged in the upper right side and the composition of the multiple structure non-metallic stiffener is distinguished, comprising the synthetic base frame (11) and the inclusions being resistant to traction (12) and the reinforcement joint (7) to the outer rolling ring (3b) being represented by the thickest line.

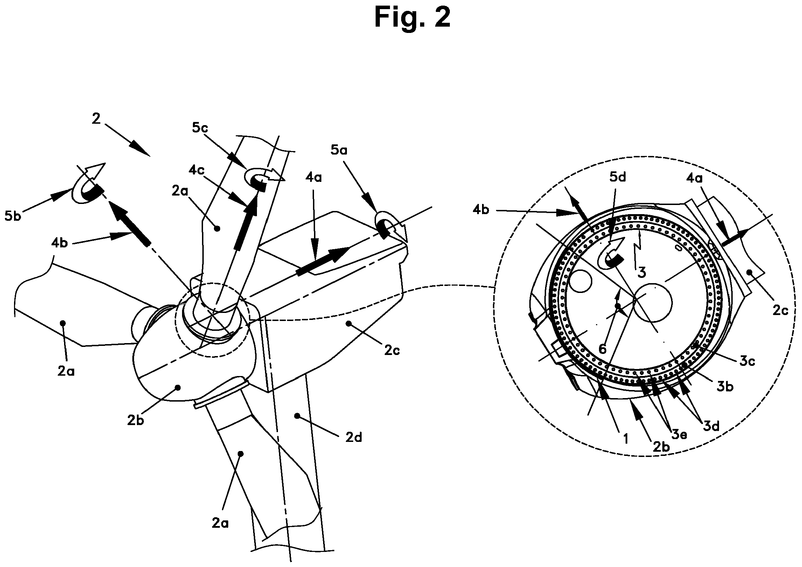

Figure 2 is meant to explain the forces acting on the wind turbines, depicting in the left side an isometric view of the wind turbine (2) structure and forces and torques it undergoes during operation.

In the right side of figure 2 a plan view of the enlarged detail of the bearing (3) in the joint hub (2b) of the blades of the wind turbine (2) having the usual stiffener (1) attached to the bearing (3) is seen and the stresses generated by the wind turbine (2) operation are also seen.

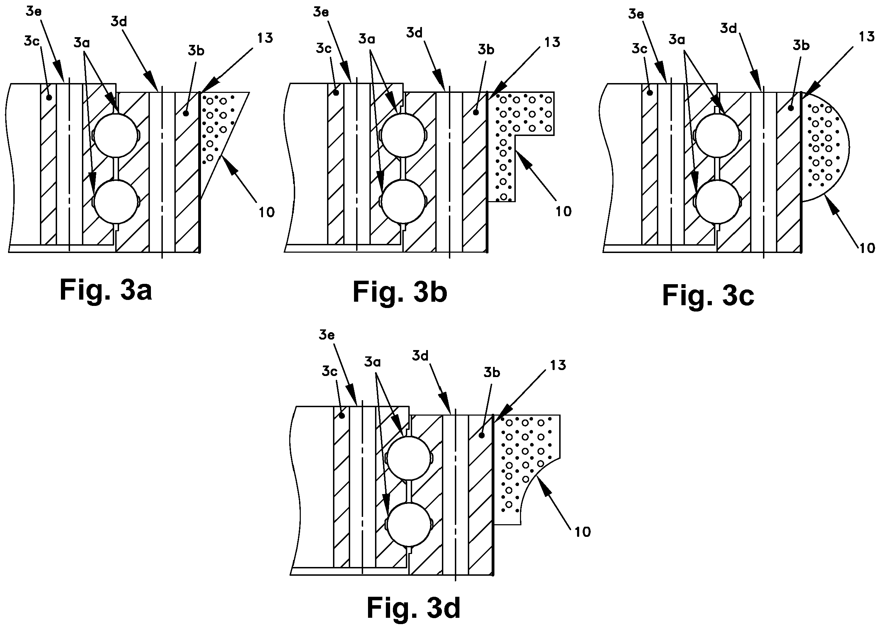

Figures 3a, 3b, 3c and 3d depict different possible embodiments of the cross section (14) of the multiple structure non-metallic stiffener (10).

The following references are cited in such figures:
1. Usual stiffener
2. Wind turbine
2a. Blade of the wind turbine (2)
2b. Joint hub of the blades of the wind turbine (2)
2c. Gondola of the wind turbine (2)
2d. Tower of the wind turbine (2)
3. Bearing
3a. Rolling element
3b. Outer rolling ring
3c. Inner rolling ring
3d. Attachment hole for the outer rolling ring (3b)
3e. Attachment hole for the inner rolling ring (3c)
4. Generated forces in the wind turbine (2)
4a. Force due to the wind
4b. Force due to the blade weight
4c. Centrifugal force due to the turn of the blade
5. Generated torques in the wind turbine (2)
5a. Torque generated by the force due to the wind (4a)
5b. Torque generated by the force due to the blade weight
5c. Torque generated by the centrifugal force due to the turn of the blade (4c).
5d. Torque generated by the force due to the wind (4a) and the force due to the blade weight (4b).
6. Arc circumferential area having critical stress
10. Multiple structure non-metallic stiffener
11. Synthetic base frame
12. Inclusions being resistant to traction
13. Adhesive joint of the multiple structure non-metallic stiffener (10) to the outer rolling ring (3b).
14. Cross section

### Disclosure of a preferred embodiment

Regarding the above-mentioned drawings and references, the appended figures illustrate a preferred mode to carry out the object of this invention which concern a bearing having a stiffener of overstress compensation using such stiffener to compensate overstresses produced in specific arc circumferential areas having critical stress in a rolling ring and being used in eolian facilities or like where the bearing (3) in the arc circumferential area with critical stress (6) has a multiple structure non-metallic stiffener attached thereto (10) comprising a synthetic base frame (11) and inclusions being resistant to traction (12) facing towards, at least, the direction of the main overstress to be compensated.

Figure 1, in the right side, depicts the bearing (3) of the joint hub (2b) of the blades of the wind turbine (2). According to the operation of the wind turbine (2) the bearing (3) undergoes different types of forces and torques. Therefore, it is shown that the bearing (3) is undergoing the force due to the wind (4a) and the force due to the blade weight (4b) creating the torque generated by the force due to the wind (4a) and by the force due to the blade weight (4b).

The above-mentioned figure also depicts the arc circumferential area with critical stress (6) in the bearing (3) where the strongest stresses are produced, according to the circumferential direction to the turning shaft of the bearing (3). Such arc circumferential area with critical stress (6) is reinforced by the multiple structure non-metallic stiffener (10).

The new concept to manufacture the multiple structure non-metallic stiffener (10) allows every component of the multiple structure to have a different structural function and the synthetic base frame (11) to be suitable to attach the multiple structure no-metallic stiffener (10) to the outer rolling ring (3b) and/or the inner rolling ring (3c) and also attach the inclusions being resistant to traction (12), which are the most active elements in the compensation of overstresses and, therefore, they may be set in material, section, distribution and even position within the synthetic base frame section (11); all the above-mentioned namely fulfilling the programmed carrying out.

In the lower right side the bearing (13) cross section (14) is represented, where, in the upper right side, it depicts a detailed view of the multiple structure non-metallic stiffener (10), comprising a synthetic base frame (11) and inclusions being resistant to traction (12). Thanks to such arrangement, since the materials are lighter than metal, a lighter bearing (3) is achieved and, consequently, a lighter overall wind turbine structure (2).

It is also seen that the inclusions being resistant to traction (12) are preferably made up of resistant structural elements facing the direction of the main overstress to be compensated. Such feature allows a higher absorption of the stresses to be generated in the bearing (3) and, therefore, a higher resistance.

In the enlarged detail of the multiple structure non-metallic stiffener (10) the reinforcement joint (7) between the outer rolling ring (3b) of the multiple structure non-metallic stiffener (10) and the arc circumferential area with critical stress (6) is depicted and such joint will be achieved through adhesive joint (13), being reinforced with screwed metallic joints or not. In a preferred embodiment, it is foreseen that the reinforcement joint (7) to the outer rolling ring is made through adhesive joint (12). The advantages of such arrangement are that, being adhesive joints, they need smaller space than the metallic joints and, therefore, the weight of the wind turbine (2) structure is reduced. Additionally, there is no need to unscrew the outer rolling ring (3b) and/or the inner rolling ring (3c) from the bearing (3).

Figure 1 also shows that the multiple structure non-metallic stiffener (10) has an arc amplitude, section, material and nature being resistant to traction (12) according to the specific overstress of each bearing (3).

It is foreseen that the inclusions being resistant to traction (12) may adopt single-line and/or braided cord shape, mesh shape or fabric having complementary resistance in cross direction, so the bearing (3) is able to support heavier stresses.

Other possible embodiments of the invention are shown in figures 3a, 3b, 3c and 3d. Thus, it is foreseen that the adoption of cross sections (14) may be suitable for different stresses. Therefore, the use of a certain type of cross section or another (14) is possible according to the overstresses to be supported and the type of eolian facilities.

Likewise, it is foreseen that the variable distribution of inclusions may be resistant to traction (12) within the same cross section (14). Thus, an increase of the stiffness in the multiple structure non-metallic stiffener is possible (3) in a specific area, and, therefore, it is possible to support higher stresses according to the features of the eolian facilities.

Another feature of this invention is that it is foreseen that the multiple structure non-metallic stiffener (10) is included around the outer ring (3b) and/or the inner ring (3c) of the bearing (3). Thus, it is possible to place the multiple structure non-metallic stiffener (10) in different areas based on the required needs.

Another feature of this invention is that it foreseen that the angular amplitude of the multiple structure non-metallic stiffener (10) may reach the complete crown (360°), if desired. Thus, it is possible to reinforce the bearing (3) based on the features of the facilities.

Eventually, another feature of this invention is that it is foreseen that the inclusions (12) being resistant to traction may be totally or partially metallic, maintaining the non- metallic feature of the multiple structure non-metallic stiffener (10). Thus, a more versatile multiple structure non-metallic stiffener is achieved, and it may be adapted to any kind of facilities based on the required needs.

Thus, according to this invention, the multiple structure non-metallic stiffener (10) may be made using a synthetic base frame (11) comprising reinforcement material made up of high elastic module carbon fiber. Thus, a stiffness is obtained being similar to the one obtained by a usual stiffener (1) adding approximately 20% area of material to compensate the difference of the steel elastic module. Still, having a much smaller density, the final sum of added weight may be four times smaller comparing to the usual stiffener (1). Therefore, in the case of a two thousand and five hundred kilograms (2,500 kg) bearing (3), instead of adding an usual stiffener (1) weighting two hundred and fifty kilograms (250 kg), a multiple structure non-metallic stiffener (10) weighting sixty five kilograms (65 kg) may be obtained.

Regarding the adhesive joint (13) of the multiple structure non-metallic stiffener (10) to the outer rolling ring (3b), it may be carried out through stiff adhesives, for example, epoxy or methacrylate reaching high resistances similar to the ones obtained by screwed joints and having long durability.

This invention is applicable to any type of bearing (3) where the rolling elements (3a) may be balls and/or rollers or any of currently used elements.

Variations in materials, shape, size or arrangement of the above-mentioned elements, described in a non-limiting way, do not alter the spirit of this invention, being sufficient for a skilled in the art to procced to manufacture it.

## Claims

1. Bearing having a stiffener of overstress compensation using such stiffener to compensate overstresses produced in specific arc circumferential areas having critical stress in a rolling ring and being used in eolian facilities or like **characterized in that** the bearing (3) in the arc circumferential area with critical stress (6) has a multiple structure non-metallic stiffener attached thereto (10) comprising a synthetic base frame (11) and inclusions being resistant to traction (12) facing towards, at least, the direction of the main overstress to be compensated.

2. Bearing having a stiffener of overstress compensations according to claim 1, **characterized in that** the inclusions being resistant to traction (12) are preferably made up of resistant structural elements facing the direction of the main overstress to be compensated.

3. Bearing having a stiffener of overstress compensations according to the preceding claims, **characterized in that** the attachment of the multiple structure non-metallic stiffener (10) to the arc circumferential area with critical stress (6) may be done through an adhesive joint (13), being reinforced with screwed metallic joints or not.

4. Bearing having a stiffener of overstress compensations according to the preceding claims, **characterized in that** the multiple structure non-metallic stiffener (10) has an arc amplitude, section, material and nature of the inclusions being resistant to traction (12) according to the specific overstress of each bearing.

5. Bearing having a stiffener of overstress compensations according to the preceding claims, **characterized in that** it is foreseen that the inclusions being resistant to traction (12) may adopt single-line and/or braided cord shape, mesh shape or fabric having complementary resistance in cross direction.

6. Bearing having a stiffener of overstress compensations according to the preceding claims, **characterized in that** the adoption of suitable cross sections (14) for possible stresses is foreseen.

7. Bearing having a stiffener of overstress compensations according to the preceding claims, **characterized in that** the variable distribution of the inclusions being resistant to tractions (12) within the same cross section (14) is foreseen

8. Bearing having a stiffener of overstress compensations according to the preceding claims, **characterized in that** it is foreseen that the multiple structure non-metallic stiffener (10) is included around the outer rolling ring (3b) and/or the inner rolling ring (3c) of the bearing (3).

9. Bearing having a stiffener of overstress compensations according to the preceding claims, **characterized in that** it is foreseen that the angular amplitude of the multiple structure non-metallic stiffener (10) may reach the complete crown (360°), if desired.

10. Bearing having a stiffener of overstress compensations according to the preceding claims, **characterized in that** it is foreseen that the inclusions being resistant to traction (12) are totally or partially metallic, and maintaining the non-metallic feature of the multiple structure non-metallic stiffener (10).
